# EUROPEAN PATENT APPLICATION

(11) **EP 4 408 118 A1**
(43) Date of publication of application: **31.07.2024**
(21) Application number: 21958380.4
(22) Date of filing: 22.09.2021
(51) Int. Cl.: H04W 76/18, H04W 74/08

(54) **TERMINAL, WIRELESS COMMUNICATION SYSTEM, AND WIRELESS COMMUNICATION METHOD**

(71) Applicant: NTT DOCOMO, INC., Tokyo 100-6150 (JP)
(72) Inventor: MIN Tianyang, Tokyo 100-6150 (JP)
(74) Representative: Hoffmann Eitle
(86) International application number: PCT/JP2021/034908
(87) International publication number: WO 2023/047504

(57) **Abstract**

A terminal executes a random access procedure specific to a slice in which a network is divided into specific units, and transmits a report including related information on the random access procedure to the network when the random access procedure fails.

## Description

### TECHNICAL FIELD

The present disclosure relates to a terminal, a radio communication system, and a radio communication method that support slices in which a network is divided into specific units.

### BACKGROUND ART

The 3rd Generation Partnership Project (3GPP) has prepared a specification for Long Term Evolution (LTE) and the 5th generation mobile communication system (which may be called 5G, New Radio (NR), or Next Generation (NG)), and is also in the process of specifying the next generation called Beyond 5G, 5G Evolution, or 6G.

After 3GPP Release-15 (NR), the terminal (User Equipment, UE) has an ANR (Automatic Neighbour Relation) function, which can automatically generate and update neighboring cell information of the UE, specifically, an NRT (Neighbour Relation Table). This makes it possible to realize proper handover of the UE.

In addition, in 3GPP Release-17, an architecture (RAN Slicing) has been considered in which a radio access network (RAN) is divided into slices in a service unit, such as a use case or a business model (NON-PATENT LITERATURE 1). For example, in RAN Slicing, a slice-aware cell reselection and a slice specific random access channel (RACH) have been considered.

### CITATION LIST

### NON-PATENT LITERATURE

NON-PATENT LITERATURE 1: "Enhancement of RAN slicing for NR", RP-211289, 3GPP TSG RAN meeting #92e, 3GPP, June 2021

### SUMMARY OF THE INVENTION

However, in the current 3GPP specification, there is a problem that it is difficult for the UE and the network to appropriately share slice information, regarding RAN slicing. For this reason, it is also difficult to construct a self-organizing network (SON) that corresponds to the slice.

Therefore, the following disclosure has been made in view of such circumstances, and an object of the present disclosure is to provide a terminal, a radio communication system, and a radio communication method with which it is possible to appropriately share slice information, regarding RAN slicing.

An aspect of the present disclosure is a terminal (UE 200) including a control unit (control unit 240) that controls an association between neighboring cells; and a transmission unit (slice related information processing unit 230) that transmits neighboring cell information including slice information in which a network is divided into specific units, to the network.

An aspect of the present disclosure is a radio communication system including a terminal and a radio base station, and the terminal includes:
a control unit that controls an association between neighboring cells; and a transmission unit that transmits neighboring cell information including slice information in which a network is divided into specific units, to the network, in which the radio base station includes a reception unit (ANR function unit 120) that receives the neighboring cell information.

An aspect of the present disclosure is a radio communication method including: a step of controlling, by a terminal, associations between neighboring cells; a step of transmitting, by the terminal, neighboring cell information including slice information in which a network is divided into specific units, to the network; and a step of receiving, by the network, the neighboring cell information.

An aspect of the present disclosure is a terminal (UE 200) including: a control unit (control unit 240) that selects a cell supporting a slice in which a network is divided into specific units, or a cell not supporting the slice; and a transmission unit (slice related information processing unit 230) that transmits a report including slice related information to the network when the selected cell does not support a requested slice.

An aspect of the present disclosure is a radio communication system including a terminal and a radio base station, in which the terminal includes: a control unit that selects a cell supporting a slice in which a network is divided into specific units, or a cell not supporting the slice; and a transmission unit that transmits a report including slice related information to the network when the selected cell does not support a requested slice, and the radio base station includes a reception unit (UE connection control unit 130) that receives the report.

An aspect of the present disclosure is a radio communication method including: a step of selecting, by a terminal, a cell supporting a slice in which a network is divided into specific units, or a cell not supporting the slice; a step of transmitting, by the terminal, a report including slice related information to the network when the selected cell does not support a requested slice; and a step of receiving, by the network, the report.

An aspect of the present disclosure is a terminal (UE 200) including: a control unit (control unit 240) that executes a random access procedure specific to a slice in which a network is divided into specific units; and a transmission unit (slice related information processing unit 230) that transmits a report including related information on the random access procedure to the network when the random access procedure fails.

An aspect of the present disclosure is a radio communication system including a terminal and a radio base station, in which the terminal includes: a control unit that executes a random access procedure specific to a slice in which a network is divided into specific units; and a transmission unit that transmits a report including related information on the random access procedure to the network when the random access procedure fails, and the radio base station includes a reception unit (UE connection control unit 130) that receives the report.

An aspect of the present disclosure is a radio communication method including: a step of executing, by a terminal, a random access procedure specific to a slice in which a network is divided into specific units; a step of transmitting, by the terminal, a report including related information on the random access procedure to the network when the random access procedure fails; and a step of receiving, by the network, the report.

### BRIEF DESCRIPTION OF THE DRAWINGS

[FIG. 1] FIG. 1 is an overall schematic diagram of a radio communication system 10.
[FIG. 2] FIG. 2 is a functional block diagram of a gNB 100.
[FIG. 3] FIG. 3 is a functional block diagram of UE 200.
[FIG. 4] FIG. 4 is a diagram illustrating a configuration example of an ANR function unit 120.
[FIG. 5] FIG. 5 is a diagram illustrating a configuration example of a slice group.
[FIG. 6] FIG. 6 is a diagram illustrating an example of a report sequence of a slice group ID according to operation example 1.
[FIG. 7] FIG. 7 is a diagram illustrating an example of signaling of slice related information between nodes according to the operation example 1.
[FIG. 8] FIG. 8 is a diagram illustrating an example of a communication sequence according to operation example 2.
[FIG. 9] FIG. 9 is a diagram illustrating an example of a communication sequence according to operation example 3.
[FIG. 10] FIG. 10 is a diagram illustrating a sequence example of slice remapping according to operation example 4 (Slice re-mapping decided by T-gNB (example 1)).
[FIG. 11] FIG. 11 is a diagram illustrating a sequence example of slice remapping according to the operation example 4 (Slice remapping decided by T-gNB (example 2)).
[FIG. 12] FIG. 12 is a diagram illustrating a sequence example of slice remapping according to the operation example 4 (Slice remapping decided by AMF and T-gNB).
[FIG. 13] FIG. 13 is a diagram illustrating a sequence example of slice remapping according to the operation example 4 (Slice remapping decided by SN).
[FIG. 14] FIG. 14 is a diagram illustrating an example of a communication sequence according to operation example 5.
[FIG. 15] FIG. 15 is a diagram illustrating an example of a hardware configuration of the gNB 100 and the UE 200.
[FIG. 16] FIG. 16 is a diagram illustrating a configuration example of vehicle 2001.

### DESCRIPTION OF EMBODIMENTS

Embodiments will be described below with reference to the drawings. Note that the same or similar reference numerals have been attached to the same functions and configurations, and the description thereof will be omitted as appropriate.

### (1) Overall schematic configuration of radio communication system

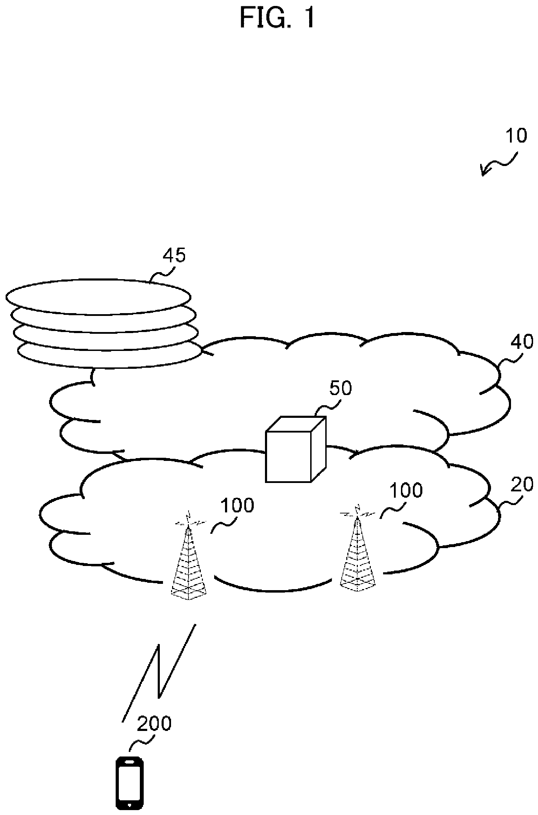

FIG. 1 is an overall schematic diagram of a radio communication system 10 according to the present embodiment. The radio communication system 10 is a radio communication system according to 5G New Radio (NR), and includes a Next Generation-Radio Access Network 20 (hereinafter, NG-RAN 20) and a terminal 200 (User Equipment 200, hereinafter, UE 200).

The radio communication system 10 may be a radio communication system according to a system called Beyond 5G, 5G Evolution, or 6G.

The NG-RAN 20 includes radio base stations 100 (gNBs 100). The specific configuration of the radio communication system 10 including the number of gNBs and UEs is not limited to the example illustrated in FIG. 1.

The NG-RAN 20 includes multiple NG-RAN nodes, specifically gNBs (or ng-eNBs) in a practical sense, and is connected to a core network 40 (which may be referred to as 5GC) according to 5G. The NG-RAN 20 is connected to an access and mobility management function 50 (AMF 50), which is included in a 5G system architecture and provides an access and mobility management function for the UE 200. In addition, a network element other than the radio communication system 10 (for example, a private network (NPN: Non-Public Network), or the like) may be connected to the core network 40.

The NG-RAN 20 and the core network 40 may provide multiple slices 45 that can be configured in a service unit, such as a use case or a business model. The multiple slices 45 may be grouped according to the contents of a service, or the like. In addition, the slice 45 may be configured only by the NG-RAN 20 (RAN Slicing). Further, the slice 45 may be interpreted as a logical network in which a network is divided into specific units, such as a service.

In RAN Slicing, a slice 45-aware cell reselection, and a slice specific random access channel (RACH) can be applied.

The gNB 100 is a radio base station in accordance with the NR, and performs radio communication in accordance with the UE 200 and the NR. Note that the gNB 100 may be configured of a CU (central unit) and a DU (distributed unit), and the DU may be separated from the CU and installed in a geographically different position.

By controlling radio signals transmitted from multiple antenna elements, the gNB 100 and UE 200 can support Massive MIMO which generates a more directional beam BM, carrier aggregation (CA) which uses multiple component carriers (CCs) bundled together, dual connectivity (DC) which simultaneously performs communication between the UE and multiple NG-RAN nodes, and the like.

In the radio communication system 10, an NRT (Neighbor Relation Table, which may be called Neighbour Cell Relation Table (NCRT)) may be used. The NRT is applied to handover (HO) of the UE 200 to other cells, and manages the identification information of neighboring cells (CGI: Cell Global Identifier). In the NRT, the contents may be configured manually in advance, or an Automatic Neighbour Relation (ANR) function, which automatically associates the information between neighboring cells (CGI), may be introduced.

### (2) Function block configuration of radio communication system

Next, a functional block configuration of the radio communication system 10 will be described. Specifically, the functional block configuration of the gNB 100 and the UE 200 will be described.

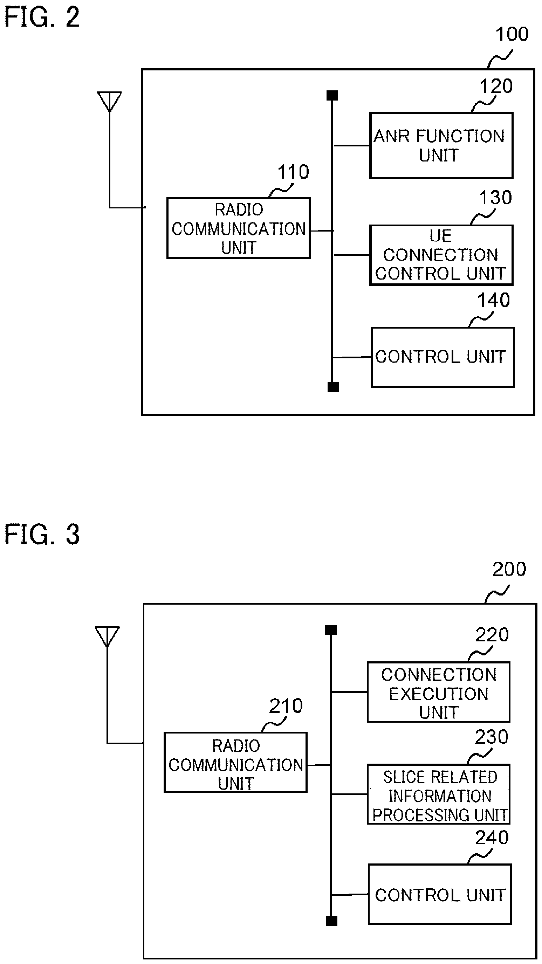

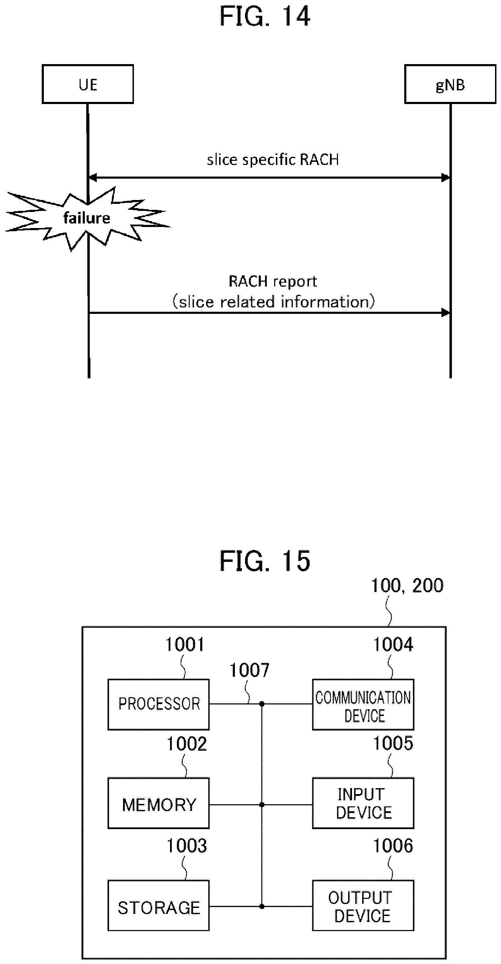

FIG. 2 is a functional block diagram of the gNB 100. FIG. 3 is a functional block diagram of the UE 200. Note that only the main functional blocks related to the description of the embodiment are illustrated in FIGS. 2 and 3, and the gNB 100 and the UE 200 have other functional blocks (for example, a power supply unit). In addition, FIGS. 2 and 3 illustrate the functional block configurations of the gNB 100 and the UE 200, and please refer to FIG. 15 for the hardware configuration.

### (2.1) gNB100

As illustrated in FIG. 2, the gNB 100 includes a radio communication unit 110, an ANR function unit 120, a UE connection control unit 130, and a control unit 140.

The radio communication unit 110 transmits a downlink signal (DL signal) in accordance with the NR. In addition, the radio communication unit 110 receives an uplink signal (UL signal) in accordance with the NR.

The ANR function unit 120 provides a function related to the ANR (Automatic Neighbour Relation). Specifically, the ANR function unit 120 can automatically associate the information between neighboring cells.

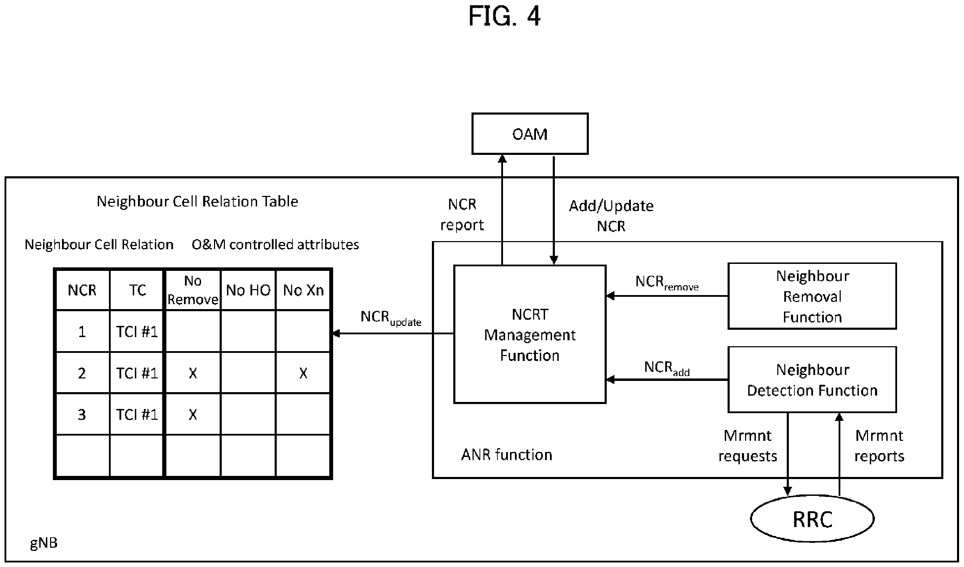

FIG. 4 illustrates a configuration example of the ANR function unit 120. As illustrated in FIG. 4, the ANR function unit can be configured of an NCRT Management Function, a Neighbour Removal Function, and a Neighbour Detection Function.

The Neighbour Cell Relation Table (NCRT) may be configured of an NCR part (NCR, Transmission Configuration Indication (TCI)), and an O&M controlled attributes part (No Remove, No HO, No Xn). Such an ANR function may be, for example, in accordance with the provisions of Chapter 15.3.3.1 of 3GPP TS38.300.

The ANR function unit 120 can receive neighboring cell information from the UE 200. In the present embodiment, the ANR function unit 120 may include a reception unit for receiving neighboring cell information. The neighboring cell information may include information on a slice 45 (slice related information). For example, the slice related information may include a slice 45, or identification information of a group of slices 45 (slice group ID).

The UE connection control unit 130 controls handover from a serving cell of the UE 200 to another neighboring cell (may be called cell reselection, transition, or the like). Specifically, the UE connection control unit 130 can execute handover to a neighboring cell satisfying a handover condition such as quality, based on the NRT or ANR function.

In addition, the UE connection control unit 130 performs control on a random access procedure (RA procedure) with the UE 200.

The UE connection control unit 130 can receive a report including slice related information. In the present embodiment, the UE connection control unit 130 may include a reception unit for receiving a report including slice related information.

The slice related information included in the report may include information indicating that the selected cell (or re-selected) by the UE 200 does not support the slice 45 corresponding to a service or the like requested by the UE 200 (or may include information on a slice that is supported).

The control unit 140 controls each functional block constituting the gNB 100. In particular, in the present embodiment, the control unit 140 can manage an association (NCR) between neighboring cells of the UE 200 (generation and update, and the like), and perform control on the slice 45 utilized by the UE 200.

Specifically, the control unit 140 can manage the NCR considering a type of slice 45 that a cell supports, based on the slice related information that the ANR function unit 120 has received from the UE 200.

In addition, the control unit 140 may control handover to a cell that supports the slice 45 requested by the UE 200, based on the slice related information that the UE connection control unit 130 has received from the UE 200.

The control unit 140 may exchange information on a slice supported by the gNB 100 with another radio base station (gNB), or the like. Specifically, the control unit 140 may share the slice related information with nodes such as other radio base stations constituting the NG-RAN 20. An example of sharing slice related information will be described later.

The channel includes a control channel and a data channel. The control channel may include a PDCCH (Physical Downlink Control Channel), a PUCCH (Physical Uplink Control Channel), a RACH (Random Access Channel, or Downlink Control Information (DCI) including a Random Access Radio Network Temporary Identifier (RA-RNTI) is possible), a Physical Broadcast Channel (PBCH), and the like.

In addition, the data channel may include a PDSCH (Physical Downlink Shared Channel), a PUSCH (Physical Uplink Shared Channel), and the like. "Data" may refer to data transmitted via the data channel.

Further, Layer 1 may be interpreted to include a lower layer, such as a physical layer. Layer 3 is a layer upper than the layer 1. The upper layer may include at least one of a radio link control layer (RLC), a packet data convergence protocol layer (PDCP), and a radio resource control layer (RRC), and the medium access control layer (MAC) may be positioned between the lower layer and the upper layer.

### (2.2) UE 200

As illustrated in FIG. 3, the UE 200 includes a radio communication unit 210, a connection execution unit 220, a slice related information processing unit 230, and a control unit 240.

The radio communication unit 210 transmits an uplink signal (UL signal) in accordance with the NR. In addition, the radio communication unit 210 receives an uplink signal (DL signal) in accordance with the NR.

The connection execution unit 220 executes the RA procedure with the network (gNB100). The connection execution unit 220 also executes handover from the serving cell to another neighboring cell. Specifically, the connection execution unit 220 can execute handover to a neighboring cell satisfying a handover condition such as quality, based on the NRT or ANR function.

The slice related information processing unit 230 executes processing of information related to a slice 45 (slice related information).

Specifically, the slice related information processing unit 230 can transmit neighboring cell information including information of the slice 45 to the network. In the present embodiment, the slice related information processing unit 230 may include a transmission unit for transmitting neighboring cell information including information of the slice 45.

For example, the slice related information processing unit 230 may transmit neighboring cell information, which include a slice (NSSAI: Network Slice Selection Assistance Information) or identification information of a group of slices (Slice group ID).

Further, if the cell selected by the connection execution unit 220 does not support the requested slice 45, the slice related information unit 230 may transmit a report including related information of the slice (slice related information) to the network. In the present embodiment, the slice related information processing unit 230 may constitute a transmission unit for transmitting a report including the slice related information.

The slice related information may clearly indicate that the requested slice 45 is not supported, or may indicate the identification information of the supported slice 45 (or slice group ID).

The slice related information may be included in a report such as a measurement report (for example, logged MDT (Minimization of Drive Test) measurement report, Immediate MDT measurement report, or measurement report). However, it may not be a measurement report, and may be another report such as a failure report (for example, an RLF report, a connEstFailReport, or a RACH report). The slice related information may be configured of, for example, identification information of multiple slices 45 (or slice group ID) associated with priorities.

The slice related information processing unit 230 may transmit a specific measurement report (for example, logged MDT) including the slice related information to the network when a connection with a cell or another cell is established after the connection execution unit 220 selects the cell.

The requested slice 45 in the selected cell may be determined based on the slice priority in the UE 200.

When the random access procedure (RA procedure) fails, the slice related information processing unit 230 may transmit a report including the related information of the RA procedure to the network. In the present embodiment, the slice related information processing unit 230 may constitute a transmission unit for transmitting a report including the related information of an RA procedure (RA procedure related information).

The RA procedure related information may include a radio resource used for executing an RA procedure. The radio resource may include a 2-step slice specific RACH resource, or a 4-step slice specific RACH resource. The RACH resource may be interpreted as a radio resource that is specific to a specific slice 45 (that is, it is not used by other slices 45).

The RA procedure-related information may also include fallback from the RA procedure specific to slice 45 (slice specific RACH) to a normal RA procedure, and/or a collision between the RA procedure specific to slice 45 and an RA procedure for a specific service. The specific service is, for example, a Multimedia Priority Service (MPS), or a Mission critical service (MCS).

The control unit 240 controls each function block constituting the UE 200. In particular, in the present embodiment, the control unit 240 controls an association between neighboring cells formed in the neighborhood of the serving cell of the UE 200.

The control unit 240 can execute an RA procedure specific to slice 45 (slice specific RACH). The slice specific RACH may include a 2-step RACH and a 4-step RACH like a normal RACH.

In the 2-step RACH, messages (MSGs) A and B (Random Access Preamble, Contention Resolution/Random Access Response (RAR)) may be transmitted and received. In the 4-step RACH, MSGs 1 to 4 (Random Access Preamble, Random Access Response, Scheduled Transmission, Contention Resolution) may be transmitted and received.

The control unit 240 can select a cell that supports or does not support the slice 45. That is, the control unit 240 may select a cell that supports a type of the slice 45 requested by the UE 200, or may select a cell that does not support a type of the slice 45 requested by the UE 200. If the control unit 240 selects a cell that does not support a type of the slice 45 requested by the UE 200, the slice related information may be transmitted as described above.

If the connection establishment of the RRC fails (connection establishment failure), the control unit 240 may transmit to the network, the slice related information of the slice 45 that is attempted to be accessed. The slice related information may be included in the ConnEstFailureReport, for example.

### (3) Operation of radio communication system

Next, an operation of the radio communication system 10 will be described. Specifically, an operation example related to the construction of Self-Organizing Networks (SON) corresponding to RAN Slicing will be described.

### (3.1) Assumption

In RAN Slicing, cell reselection is preferable realized with an awareness of slice 45 (see FIG. 1). Specifically, in order to support cell reselection with an awareness of slice 45, it is necessary to notify the UE 200 in an idle state (RRC) of the slice that the cell supports.

Here, if the NSSAI is broadcast as it is, there are problems regarding the size of the system information block (SIB) and security. For this reason, it is assumed that similar types of multiple slices 45 are managed as the same slice group, and that the Slice group ID is broadcast instead of the NSSAI.

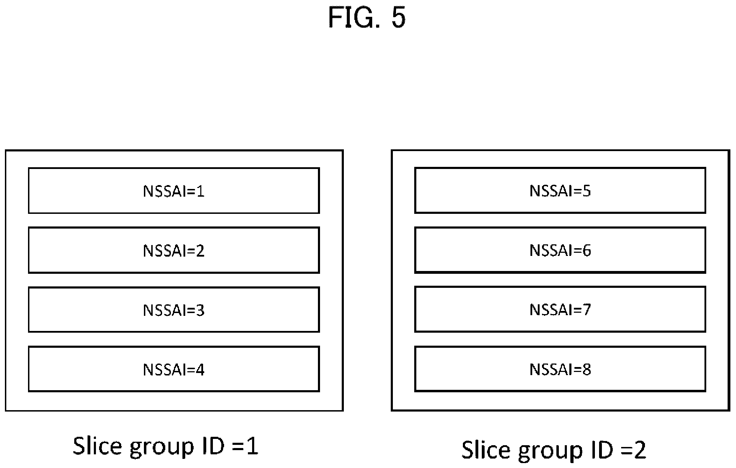

FIG. 5 illustrates a configuration example of a slice group. As illustrated in FIG. 5, the slice group may be configured of multiple pieces of NSSAI.

In RAN Slicing, it is also assumed that a slice specific RACH is applied. The slice specific RACH ensures separate RACH resources for a high priority slice in a collision type (Contention based RACH), and avoids an collision with a low priority slice, or a legacy RACH other than the slice specific RACH.

It is desirable for the slice specific RACH to ensure RACH resources for a high-priority slice in order to make a connection to the network more quickly in URLLC (Ultra-Reliable and Low Latency Communications) type services in factories, or the like. Specifically, some resources in the Contention based RACH resources are ensured for a high priority slice, which may also be called RACH resource isolation.

Accordingly, the following measures are considered.

- Configure RACH resource pool for each slice (or each slice group) and notify UE 200
- Set RACH parameter to UE 200 for each slice (or each slice group)

For example, a dedicated RACH parameter (scalingFactorBI and powerRampingStepHighPriority) may be configured for high-priority slice.

### (3.2) Operation example

In the following description, the operation examples 1 to 5 related to SON construction corresponding to RAN Slicing will be described.

### (3.2.1) Operation example 1

With the existing ANR function, there is a problem that the UE 200 cannot report information on a slice that a cell supports. In this operation example, the UE 200 may include Slice group ID information in a specific information element of the RRC layer (for example, CGIInfoNR).

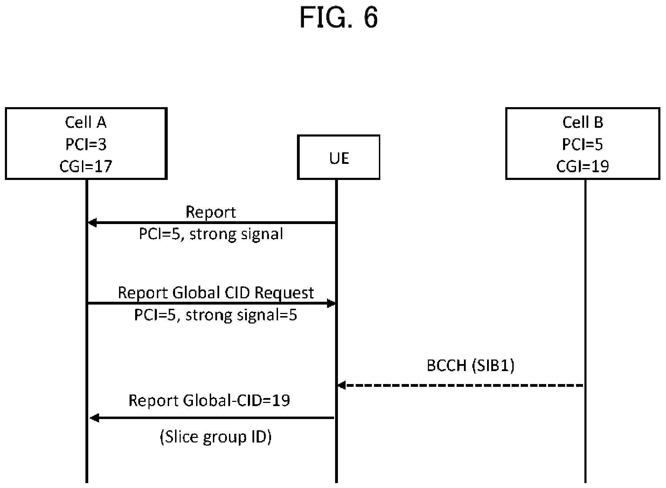

FIG. 6 illustrates an example of a report sequence of a Slice group ID according to the operation example 1. As illustrated in FIG. 6, the UE 200 is connected to the cell A, and can report neighboring cell information. Here, the UE 200 receives the SIB from the cell B via a BCCH (Broadcast Control Channel). The cell B may support RAN slicing.

In a case where the UE 200 receives a SIB from the cell B including an indication that supports RAN slicing, the UE 200 may include a Slice group ID when reporting the neighboring cell information of the cell B to the cell A (serving cell).

By incorporating the Slice group ID into the NRT, it is possible to find and select an appropriate transition destination cell so as to support the slice 45 that was used in a handover source cell (source cell).

The information of the slice that the cell supports (slice related information) may be signaled between nodes constituting the network.

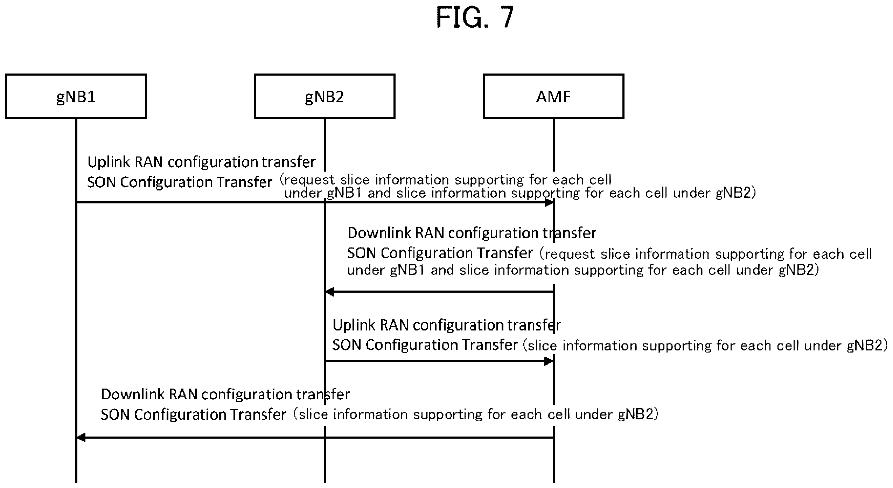

FIG. 7 illustrates an example of signaling of slice related information between nodes according to the operation example 1. As illustrated in FIG. 7, information of each slice to be supported under the control of the same AMF 50 may be signaled between gNB 1 and gNB 2 which have no Xn link.

Note that the message used for signaling is an example, and other messages may be used as long as they are transmitted and received between the nodes.

### (3.2.2) Operation example 2

In a case where the UE 200 (re) selects a cell and requests a connection, a registration failure occurs if the cell does not support a slice requested by the UE 200. This operation example make it possible to prevent such a failure in advance.

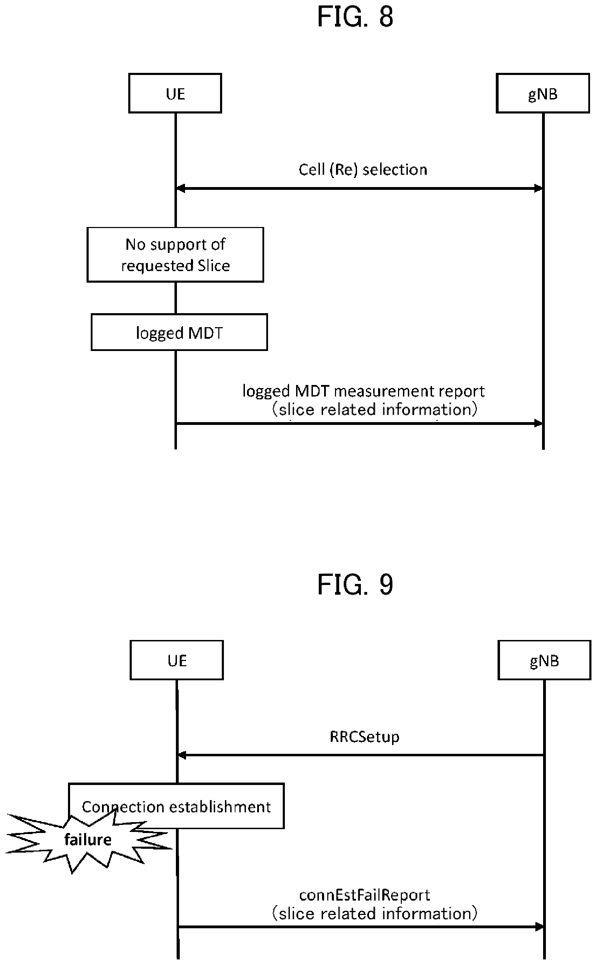

FIG. 8 illustrates an example of a communication sequence according to the operation example 2. As illustrated in FIG. 8, the UE 200 may record that the cell does not support the slice to be accessed by the logged MDT.

When entering the connected state next time, the UE 200 may report to the network by using the logged MDT measurement report, a cell ID, slice information that is not supported, and a Slice group ID that the cell supports (which may be the slice group information). These pieces of information may be collectively referred to as slice related information.

A slice to be accessed may be a slice with the highest slice priority (or, a list of slices) that is notified from the UE NAS (Non-Access Stratum) to the AS (Access Stratum). Alternatively, in slice based cell reselection, a slice to be accessed may be a slice with the highest slice priority (or a list of slices) that is stored (held) by the UE 200, or a list of slices stored (held) by the UE 200.

The slice based cell reselection may be performed, for example, as in the following procedure:
- Step 0: NAS layer at UE provides slice information to AS layer at UE, including slice priorities.
- Step 1: AS sorts slices in priority order starting with highest priority slice.
- Step 2: Select slices in priority order starting with the highest priority slice.
- Step 3: For the selected slice assign priority to frequencies received from network.
- Step 4: Starting with the highest priority frequency, perform measurements (same as legacy).
- Step 5: If the highest ranked cell is suitable (as defined in 38.304) and supports the selected slice in step 2 then camp on the cell and exit this sequence of operation.
- Step 6: If there are remaining frequencies then go back to step 4.
- Step 7: FFS: If the end of the slice list has not been reached go back to step 2.
- Step 8: Perform legacy cell reselection.

### (3.2.3) Operation example 3

If a connection establishment failure (timer T300 expires) occurs when the UE 200 executes RRC setup, there is a problem that the UE 200 cannot report information on the slice to be accessed in the cell to the network. In this operation example, the UE 200 reports such slice information to the network.

FIG. 9 illustrates an example of a communication sequence according to the operation example 3. As illustrated in FIG. 9, when a connection establishment failure (timer T300 expires) occurs, the UE 200 may include the information of a slice to be accessed (NSSAI) in the ConnEstFailureReport.

Note that the ConnEstFailureReport is merely an example, and as long as the information of the slice can be reported, another report (which may be a dedicated report, or may be included in another report such as radio link failure (RLF)) may be possible.

For example, when the UE 200 attempts to access a high-priority slice, a connection establishment failure has occurred; however, this is an important event for an operator of the radio communication system 10, and thus such an event can be useful information for improving the quality of the area including the cell.

### (3.2.4) Operation example 4

In a case where a target cell that is a handover destination cannot support a slice that was used in a source cell when performing handover of the UE 200, slice remapping can be considered.

Slice remapping may mean that during handover of the UE 200, a slice mapped by a source cell (source node) is mapped to another slice due to reasons such as not being supported by a target cell (target node).

However, when slice remapping fails (is impossible), there is a problem where the source cell (source node) cannot be notified of the reason (failure cause) (the same applies to dual connectivity configuration). In this operation example, the reason for a slice remapping failure may be notified to the source node using a specific message.

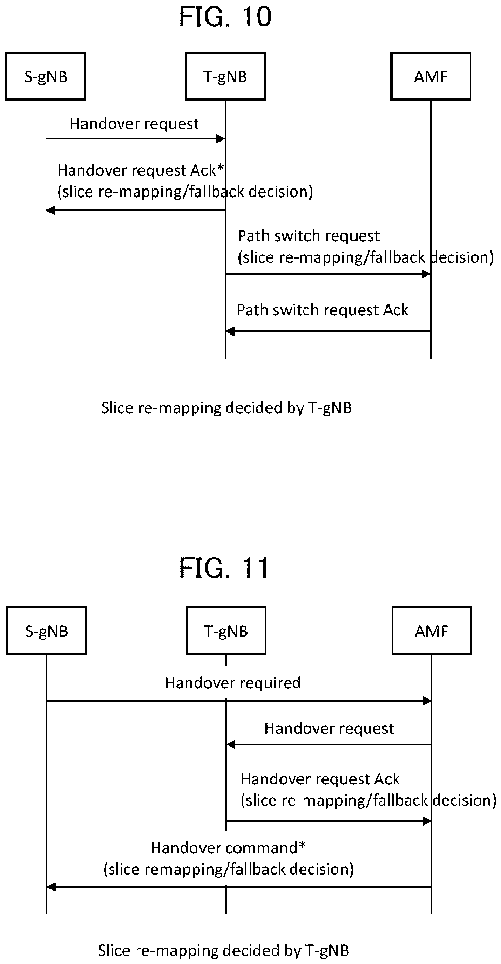

FIG. 10 illustrates a sequence example of slice remapping according to the operation example 4 (Slice re-mapping decided by T-gNB (example 1)).

FIG. 11 illustrates a sequence example of slice remapping according to the operation example 4 (Slice re-mapping decided by T-gNB (example 2)).

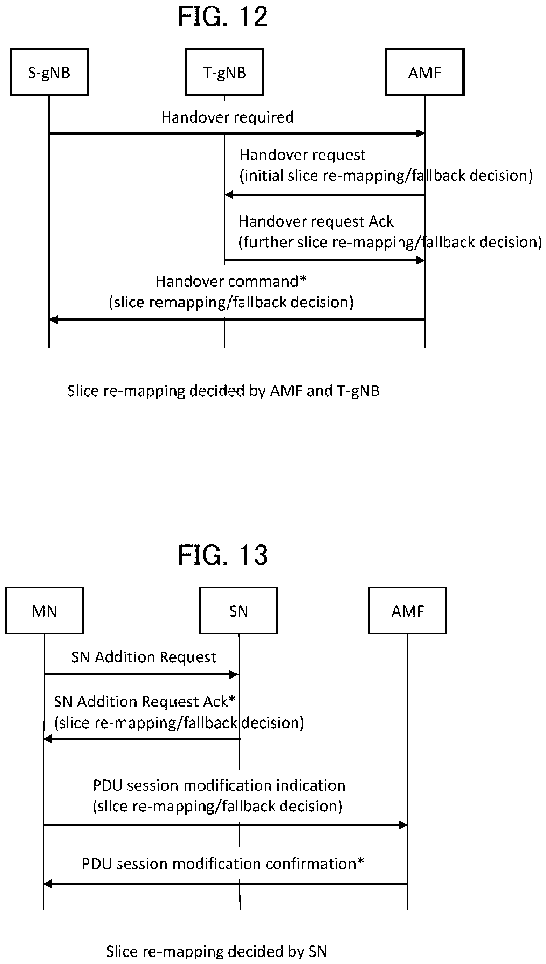

FIG. 12 illustrates a sequence example of slice remapping according to the operation example 4 (Slice re-mapping decided by AMF and T-gNB).

FIG. 13 illustrates a sequence example of slice remapping according to the operation example 4 (Slice re-mapping decided by SN).

In the case of Xn handover, if a target node cannot support some or all slices (or a list of slices) in "the PDU session resource to be setup list" included in the HO request msg. transmitted from a source node, and the target node (T-gNB) decides slice remapping, the following information may be notified to the source node.

- If the slice (or a list of slices) can be remapped to another slice (or a list of slices), the contents are notified to the source node.
- If slice remapping fails, a slice (or a list of slices) that could not be remapped, and the reason for a slice remapping failure are notified to the source node.
- In the case of NG handover, if some or all of the slices in the PDU Session Resource List included in the handover requested msg. cannot be supported from a source node to an AMF, and the AMF or a target node decides slice remapping, the following information may be notified to the source node:
- If the slice (or a list of slices) can be remapped to another slice (or a list of slices), the contents are notified to the source node.
- If slice remapping fails, a slice (or a list of slices) that could not be remapped, and the reason for a slice remapping failure are notified to the source node.
- In the case of SN addition, if some or all of the slices in "the PDU session resource to be added list" included in the SN addition request cannot be supported from the MN to the SN, and the SN decides slice remapping, the following information may be notified to the source node:
- If the slice (or a list of slices) can be remapped to another slice (or a list of slices), the contents are notified to the MN.
- If slice remapping fails, a slice (or a list of slices) that could not be remapped, and the reason for a slice remapping failure are notified to the MN.

The contents of the aforementioned notifications may be included in the messages for the source node (S-gNB) illustrated in FIGS. 10 to 13 (In FIGS. 10 to 13, such messages are indicated by *).

### (3.2.5) Operation example 5

If a slice specific RACH fails, an RACH report including appropriate RA procedure related information is necessary to be reported to the network. In this operation example, if a slice specific RACH fails, the RACH report including the RA procedure related information associated with the failure may be reported to the network.

FIG. 14 illustrates an example of a communication sequence according to the operation example 5. As illustrated in FIG. 14, when a slice specific RACH fails, RA procedure-related information including at least any of the following messages may be reported to the RACH report.

- 2-step slice specific RACH resource that was used
- 4-step slice specific RACH resource that was used
- scalingFactorBI and slice specific powerRampingStepHighPriority setting value
- The number of times performing power ramping

For example, it may be the number of times PREAMBLE_POWER_RAMPING_COUNTER is incremented.

- Slice ID (NSSAI) or slice group ID that the UE 200 attempts to access

The slice group information that the cell supports may be included in the RACH report.

- Indication indicating whether fallback has performed from 2-step slice specific RACH to Legacy 4-step common RACH
- Indication showing whether there was a collision with MPS/MCS based RACH

Indication indicating whether a slice specific RACH or an MPS/MCS based RACH was given priority when there was a collision with MPS/MCS based RACH.

### (4) Operation/Effect

According to the above-described embodiment, the following operation and effect can be obtained. According to the gNB 100 and UE 200, the following operation and effect can be obtained.

- By including a Slice group ID in the ANR function and incorporating the slice information into the NRT, an appropriate transition destination cell can be selected according to the slice that was used in the source cell (source node) side.
- If a serving cell does not support a slice to be accessed by the UE 200, such information can be reported to the network, thereby helping to optimize slice support in the area.
- When the UE 200 attempts to access a high-priority slice during RRC setup, a connection establishment failure has occurred; however, this is an important event for an operator of the radio communication system 10, and thus such an event can be information useful for improving the quality of the area including the cell.
- In a case where a target cell cannot support a slice that was used in a source cell when performing handover of the UE 200, the information indicating whether the slice has been remapped is reported to a source node, which is useful for maintaining service continuity by means of handover.
- By reporting to the network, a RACH report including RA procedure-related information on a slice specific RACH failure, it is useful for optimizing parameter setting regarding the slice specific RACH.

### (5) Other Embodiments

Although the embodiment has been described as above, the embodiment is not limited to the above description, and it is obvious to those skilled in the art that various modifications and improvements are possible.

For example, in the embodiment described above, the term slice has been used; however, as described above, a slice is a logical (virtual) network divided by service units such as a use case or a business model, and such a network may be called by another name.

In the above description, configure, activate, update, indicate, enable, specify, and select may be interchangeably interpreted. Similarly, link, associate, correspond, and map may be interchangeably interpreted, and allocate, assign, monitor, and map may also be interchangeably interpreted.

In addition, specific, dedicated, UE-specific, and UE-dedicated may be interchangeably interpreted. Similarly, common, shared, group-common, UE-common, and UE-shared may be interchangeably interpreted.

In the present disclosure, terms such as "precoding", "precoder", "weight (precoding weight)", "quasi-Co-Location (QCL)", "transmission configuration indication status (TCI status)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

The block diagram (FIGS. 2 and 3) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

Further, the above-described gNB 100 and UE 200 (the device) may function as a computer that performs processing of a radio communication method of the present disclosure. FIG. 15 is a diagram illustrating an example of a hardware configuration of the device. As illustrated in FIG. 15, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIGS. 2 and 3) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel.

Similarly, the mobile station in the present disclosure may be read as meaning a base station. In this case, the base station may have the function of the mobile station. A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a subcarrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

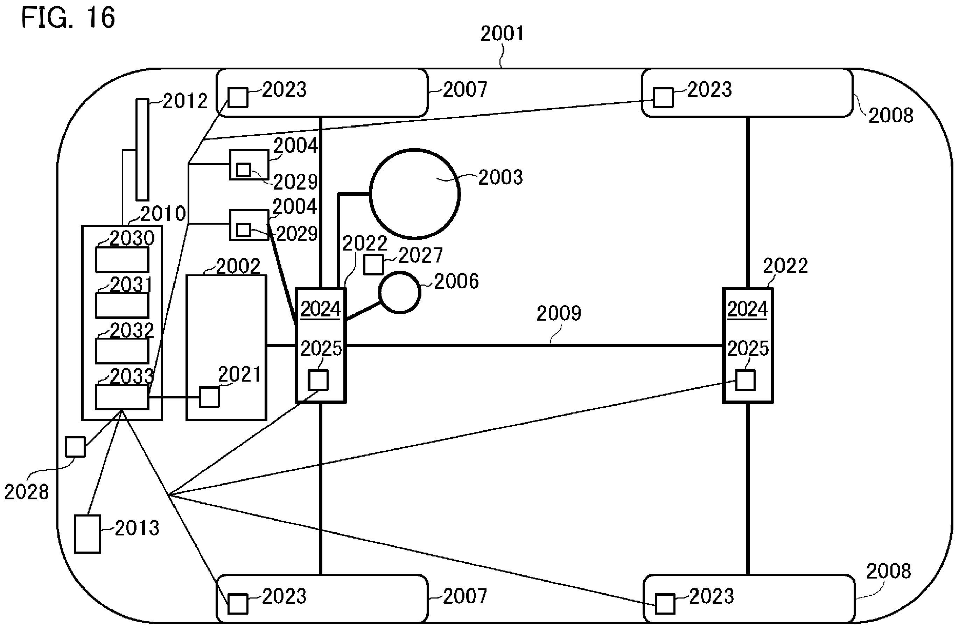

FIG. 16 illustrates a configuration example of a vehicle 2001. As illustrated in FIG. 16, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 includes, for example, an engine, a motor, and a hybrid of an engine and a motor.

The steering unit 2003 includes at least a steering wheel (also referred to as a handle), and is configured to steer at least one of front wheels and rear wheels, based on the operation of the steering wheel operated by a user.

The electronic control unit 2010 includes a microprocessor 2031, a memory (ROM, RAM) 2032, and a communication port (IO port) 2033. The electronic control unit 2010 receives signals from various sensors 2021 to 2027 provided in the vehicle. The electronic control unit 2010 may be called an ECU (electronic control unit).

The signals from the various sensors 2021 to 2028 include a current signal from a current sensor 2021 for sensing the current of a motor, a rotation speed signal of front wheels and rear wheels acquired by a rotation speed sensor 2022, a pressure signal of front wheels and rear wheels acquired by an air pressure sensor 2023, a vehicle speed signal acquired by a vehicle speed sensor 2024, an acceleration signal acquired by an acceleration sensor 2025, an accelerator pedal depression amount signal acquired by an accelerator pedal sensor 2029, a brake pedal depression amount signal acquired by a brake pedal sensor 2026, an operation signal of a shift lever acquired by a shift lever sensor 2027, and a detection signal, which is acquired by an object detection sensor 2028, for detecting obstacles, vehicles, pedestrians, and the like.

The information service unit 2012 includes: various devices such as a car navigation system, an audio system, a speaker, a television, and a radio for providing various information such as driving information, traffic information, and entertainment information; and one or more ECUs for controlling these devices. The information service unit 2012 provides various multimedia information and multimedia services to the occupants of the vehicle 1 by using information acquired from an external device via a communication module 2013 or the like.

A driving support system unit 2030 includes various devices for providing functions to prevent accidents or reduce the driver's driving load, such as a millimeter wave radar, light detection and ranging (LiDAR), a camera, a positioning locator (for example, GNSS), map information (for example, high-definition (HD) maps, autonomous vehicle (AV) maps, or the like), a gyroscopic system (for example, Inertial Measurement Unit (IMU), Inertial Navigation System (INS), or the like), an artificial intelligence (AI) chip, an AI processor, or the like; and one or more ECUs for controlling these devices. In addition, the driving support system unit 2030 transmits and receives various kinds of information via the communication module 2013 to realize a driving support function or an automatic driving function.

The communication module 2013 can communicate with the microprocessor 2031 and elements of the vehicle 1 via the communication port. For example, the communication module 2013 transmits and receives data via the communication port 2033 to and from the drive unit 2002, the steering unit 2003, the accelerator pedal 2004, the brake pedal 2005, the shift lever 2006, the right and left front wheels 2007, the right and left rear wheels 2008, the axle 2009, the microprocessor 2031 and the memory (ROM, RAM) 2032 in the electronic control unit 2010, and the sensors 2021 to 2028 all of which are provided in the vehicle 2001.

The communication module 2013 is a communication device that can be controlled by the microprocessor 2031 of the electronic control unit 2010, and can communicate with an external device. For example, the communication module 2013 transmits and receives various kinds of information with the external device by means of radio communication. The communication module 2013 may be provided inside or outside the electronic control unit 2010. The external device may be, for example, a base station, a mobile station, or the like.

The communication module 2013 transmits a current signal from a current sensor, which is input to the electronic control unit 2010, to an external device by means of radio communication. In addition, the communication module 2013 transmits to an external device by means of radio communication, a rotation speed signal of the front and rear wheels acquired by the rotation speed sensor 2022, an air pressure signal of the front and rear wheels acquired by the air pressure sensor 2023, a vehicle speed signal acquired by the vehicle speed sensor 2024, an acceleration signal acquired by the acceleration sensor 2025, an accelerator pedal depression amount signal acquired by the accelerator pedal sensor 2029, a brake pedal depression amount signal acquired by the brake pedal sensor 2026, a shift lever operation signal acquired by the shift lever sensor 2027, and a detection signal, which is acquired by the object detection sensor 2028, for detecting obstacles, vehicles, pedestrians, and the like. These signals are input to the electronic control unit 2010.

The communication module 2013 receives various pieces of information (traffic information, signal information, inter-vehicle information, and the like) transmitted from an external device, and displays them on the information service unit 2012 provided in the vehicle. The communication module 2013 also stores various pieces of information received from the external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like all of which are provided in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10:: radio communication system
- 20:: NG-RAN
- 40:: core network
- 45:: slice
- 50:: AMF
- 100:: gNB
- 110:: radio communication unit
- 120:: ANR function unit
- 130:: UE connection control unit
- 140:: control unit
- 200:: UE
- 210:: radio communication unit
- 220:: connection execution unit
- 230:: slice related information processing unit
- 240:: control unit
- 1001:: processor
- 1002:: memory
- 1003:: storage
- 1004:: communication device
- 1005:: input device
- 1006:: output device
- 1007:: bus
- 2001:: vehicle
- 2002:: drive unit
- 2003:: steering unit
- 2004:: accelerator pedal
- 2005:: brake pedal
- 2006:: shift lever
- 2007:: left and right front wheels
- 2008:: left and right rear wheels
- 2009:: axle
- 2010:: electronic control unit
- 2012:: information service unit
- 2013:: communication module
- 2021:: current sensor
- 2022:: rotation speed sensor
- 2023:: air pressure sensor
- 2024:: vehicle speed sensor
- 2025:: acceleration sensor
- 2026:: brake pedal sensor
- 2027:: shift lever sensor
- 2028:: object detection sensor
- 2029:: accelerator pedal sensor
- 2030:: driving support system unit
- 2031:: microprocessor
- 2032:: memory (ROM, RAM)
- 2033:: communication port

## Claims

1. A terminal comprising:
a control unit that executes a random access procedure specific to a slice in which a network is divided into specific units; and
a transmission unit that transmits a report including related information on the random access procedure to the network when the random access procedure fails.

2. The terminal according to claim 1, wherein
the related information includes a radio resource used for executing the random access procedure.

3. The terminal according to claim 1, wherein
the related information includes fallback from the random access procedure specific to the slice to a normal random access procedure.

4. The terminal according to claim 1, wherein
the related information includes a collision between the random access procedure specific to the slice and a random access procedure for a specific service.

5. A radio communication system including a terminal and a radio base station, wherein the terminal includes:
a control unit that executes a random access procedure specific to a slice in which a network is divided into specific units; and
a transmission unit that transmits a report including related information on the random access procedure to the network when the random access procedure fails, and
the radio base station includes a reception unit that receives the report.

6. A radio communication method including:
a step of executing, by a terminal, a random access procedure specific to a slice in which a network is divided into specific units;
a step of transmitting, by the terminal, a report including related information on the random access procedure to the network when the random access procedure fails; and
a step of receiving, by the network, the report.
